Europäisches Patentamt

European Patent Office

Office européen des brevets

(19)

(11)  **EP 1 101 179 B1**

(12)  ## EUROPEAN PATENT SPECIFICATION

(45) Date of publication and mention
of the grant of the patent:
**19.05.2004  Bulletin 2004/21**

(51) Int Cl.⁷: **G06F 17/60**

(86) International application number:
**PCT/FI1999/000640**

(21) Application number: **99936632.1**

(22) Date of filing: **26.07.1999**

(87) International publication number:
**WO 2000/005665 (03.02.2000 Gazette 2000/05)**

(54) **METHOD IN NOISE MANAGEMENT AND NOISE CONTROL PLANNING**

VERFAHREN IN GERÄUSCHMANAGEMENT UND GERÄUSCHKONTROLLPLANUNG

PROCEDE DE GESTION DU BRUIT ET DE PLANIFICATION DE MESURES ANTIBRUIT

(84) Designated Contracting States:
**AT BE CH CY DE DK ES FI FR GB GR IE IT LI LU
MC NL PT SE**

(30) Priority: **24.07.1998  FI  981660**

(43) Date of publication of application:
**23.05.2001  Bulletin 2001/21**

(73) Proprietor: **Finnish Acoustics Centre Ltd.
00240 Helsinki (FI)**

(72) Inventor: **TUOMINEN, Heikki, T.
FIN-02710 Espoo (FI)**

(74) Representative: **Peltonen, Antti Sakari et al
Kolster Oy Ab,
Iso Roobertinkatu 23,
P.O. Box 148
00121 Helsinki (FI)**

(56) References cited:
- **Jens Fitzke, GIS-gestützte Berechnung von
Schallimmissionen. (on line) (September 1996)
Retrieved from the Internet <URL:
http://www.uni-klu.ac.at/groups/geo/
gismosim/paper/fitzke/fitzke.htm>,
XP002921555**
- **COLEMAN D. ET AL: 'A System of Subroutines
for Iteratively Reweighted Least Squares
Computations' ACM TRANSACTIONS ON
MATHEMATICAL SOFTWARE (TOMS) vol. 6, no.
3, September 1980, pages 327 - 336**

**Description**

BACKGROUND OF THE INVENTION

The present invention concerns a method to minimize re-sampling of noise levels when performing noise management and noise control planning.

Environmental management procedures and noise mapping are widely used and very intensively spreading in the US and in the EU. An essential part of noise management is to know the present noise situation, and to be able to estimate future situation(s). Noise situation is one of the factors that the owner wants to keep in control, i.e. to manage it.

Surveys of noise situation are made in an increasing amount in connection with land use planning, environmental protection etc. and in working environments (like working places) to improve hearing protection.

Most large airports already use geographical information systems (GIS) for noise management. Many larger industrial plants, cities and railroad networks do some kind of follow-up of the noise they produce, by e.g. performing measurements repeatedly.

Noise situation is here defined as the combination of A) EMISSION: Noise sources (incl. their number, types, locations, directivities and ways of operation) B) PROPAGATION: Noise attenuation along its path to the receiver point (incl. attenuating factors like screening, ground effect, reflections, room acoustics, absorption etc.) and C) IM-MISSION: Acoustical factors at receiving points (incl. location, effect of other noise sources, receiver-specific sound insulation e. g. by walls or hearing protectors) D) DESCRIPTOR being used (in form of D1: time weighting e.g. equivalent sound level during a pre-defined time-period, or maximum noise levels and D2: frequency weighting).

From another point of view, the noise situation can also be understood of being comprised of scenarios and noise control.

SCENARIOS are trends or distinct instances in time, describing how the situation is changing without the intervention of the observer. The observer may in this case be e.g. the producer of the noise survey. NOISE CONTROL contains all actions taken or planned in order to keep or get control over the noise situation. Noise control is most often done as an attempt to minimize the inverse effects which the noise may otherwise produce.

By noise SAMPLING it is understood acquisition of noise levels by measurement, calculation or simulation. This is often time-demanding and costly.

By geographical information it is understood any combination of an indication of location (e.g. coordinates) and at least one property (e.g. noise level) that prevails in that location. A specific genre of electronic tools is developed for handling geographical information: Geographical Information Systems (GIS).

Survey of a noise situation at a time instant requires time and financial effort and this effort must be repeated for each instant of time that needs to be known to be able to plan preventive actions, like noise control, i.e. to perform active noise management. There is a need for more effective methods to perform the survey or to minimize the amount of re-sampling. The former need is answered by calculation methods that can be used for obtaining data of noise situation, but a method to cover the latter need is not yet existing. The object of the present invention is to disclose such a method.

Traditionally, when noise situation is managed and its development must be surveyed through time (e.g. years) a new sampling of noise levels is necessary for every new situation.

BRIEF SUMMARY OF THE INVENTION

Accordingly, it is an object of the present invention to create a method for forming automatically in a digital processor a new noise level for an observation point, here called as coverage point of a noise source based on earlier noise level data stored as noise levels for noise source-coverage point pairs covering at least essentially the same geographical area in order to minimize re-sampling of noise levels in noise management and noise control planning. The method is characterized in that it comprises the steps of

estimating a first noise level for said coverage point by adoption of an earlier noise level if said coverage point essentially corresponds to a coverage point present in the earlier noise level data or by derivation from noise level of at least one earlier coverage point found in the earlier noise level data within a predetermined distance from said coverage point;

accepting said first noise level in case of essential similarity in geometry of noise propagation path between noise source and coverage point for said coverage point and the coverage point or points which were used in estimating said first noise level; and

calculating a new noise level by applying to said first noise level a correction factor or correction factors calculated based on differences causing changes in noise level at said coverage point.

The invention is based on the idea of gathering, besides noise levels, also appropriate non-acoustical data and knowledge about the noise situation and using these to classify the noise data when sampled and using sub-methods of processing the previously sampled data to minimize the need of totally new sampling and sub-methods for combining and numerically correcting new and previous samples to obtain a total picture of the new noise situation.

The method according to the invention uses non-acoustical data and knowledge about noise sources, propagation paths and receiver positions to define the new noise situation in a coverage point for which a noise level is to be formed based on earlier noise level data. The method may be applied to one or parallel development scenarios in time, also retrospective.

The noise levels i.e. the earlier noise level data used in the present invention may have been acquired or sampled by measurements or otherwise, e.g. by calculation or simulation, or any combinations of these. The noise levels referred to in this application are used to present a noise situation.

The method according to the present invention, when there are available more than one set of earlier noise level data stored as noise levels for noise source-coverage point pairs covering at least essentially the same geographical area, preferably further comprises the step of

creating a ranking order for the sets of earlier noise level data based on type and amount of similarity between the new set of data to be created and the earlier sets of data; and
taking the sets of data for processing in decreasing ranking order for estimation of said first noise level.

Preferably the method further comprises the step of comparing the type of noise weighting used for an earlier set of noise data to the wanted type of noise weighting and passing on for ranking only those sets of data having the wanted type of weighting.

The method can further comprise the step of updating said first noise level by a weight factor before calculating Xa new noise level in order to take a change in the importance of said coverage point into account. Such change in importance can be e.g. increase in number of persons staying at that coverage point (e.g. living there).

According to the present invention noise situation is described according to the following descriptors:

Scenario of Emission (SCE):

Consisting of descriptions of the trends or distinct time instances of the noise emission, including but not limited to

- speed, composition and amount of road traffic
- speed, composition and amount of rail traffic
- number and type of noise-producing machines and equipment
- number and type of noise-producing activities, like sports.

Scenario of Geometry (SCG):

Consisting of descriptions of the trends or distinct time instances of the noise propagation geometry, including but not limited to

- location of roads and railroads
- location and direction of noise-producing machines and equipment
- geometrical objects that may affect the sound propagation
- weather situations that may affect the sound propagation
- acoustical properties of surfaces that may affect the sound propagation.

Scenario of Coverage (SCC):

Consisting of descriptions of the trends or distinct time instances of the noise receiver points (e.g. housing, working places, areas of leisure), including but not limited to

- new position and areas where people may reside
- areas and locations where people no longer reside
- amounts of people in different locations, useable for e.g. weighting of relative importance of two areas in decision-making of noise control.

Noise Control by Emission (NCE):

Consisting of descriptions of the noise control actions (taken or planned) upon the noise source emission properties, including but not limited to

- actions upon speed, composition and amount of traffic
- actions upon the emission of noise sources, e.g. by mufflers
- actions to diminish number of noise sources
- actions to limit the operating time of noise-producing equipment
- actions to purchase other types of machines and equipment
- duration and time of noise-producing activities

Noise Control by Geometry (NCG):

Consisting of descriptions of the noise control actions (taken or planned) upon the noise propagation geometry, including but not limited to

- geometrical objects that may affect the sound propagation, including noise screening walls, earthworks, buildings, vegetation etc.
- acoustical properties of surfaces that may affect the sound propagation

Noise Control by Protection (NCP):

Consisting of descriptions of the noise control actions (taken or planned) upon the noise receiver protection, including but not limited to

- protection of apartments and housing by, e.g. improved sound insulation of windows or outer shell of buildings
- limiting the allowed time of residing in high-level areas in industry
- protecting people with personal hearing protectors.

Noise Weighting (WGH):

Consisting of descriptions of the noise descriptors, including but not limited to

- cumulated personal noise dose during working day
- equivalent noise level daytime in apartments
- maximum noise level during the night or other period

In simpler applications and to avoid excessive user complexity, these descriptors may also be presented as combinations, e.g. by using only one concept of "Scenario" as combination e.g. SCE, SCG and SCC.
The present invention allows considerable savings in time and economical effort to be achieved in creation of a new noise situation, due to the reduction in amount of re-sampling of noise levels.

BRIEF DESCRIPTION OF THE SEVERAL VIEWS OF THE DRAWING

The method according to the invention will be described more in detail by means of a preferred embodiment with reference to the appended drawing on which:

Fig 1 shows as an example a flowchart describing the method according to the present invention;
Fig 2 shows as an example a flowchart for one step shown in Fig. 1; and
Fig 3 shows as an example a flowchart for another step shown in Fig. 1.

DETAILED DESCRIPTION OF THE INVENTION

In implementing the method according to the invention the wanted result is a set of noise level data described as noise levels in coverage points. To implement the method it is necessary to gather appropriate non-acoustical data and knowledge about the noise situation in the coverage points e.g. about changes in the geometry of the area to be examined. Further it is necessary to have data (measured, calculated, predicted or otherwise estimated) concerning changes in the noise emission of the noise sources and possible noise protection measures taken. By this information the geometry of the noise propagation path between the source and the coverage point can be defined, but the noise level caused by the noise source in the coverage point is not known. This is just the information to be formed by the method of the invention.

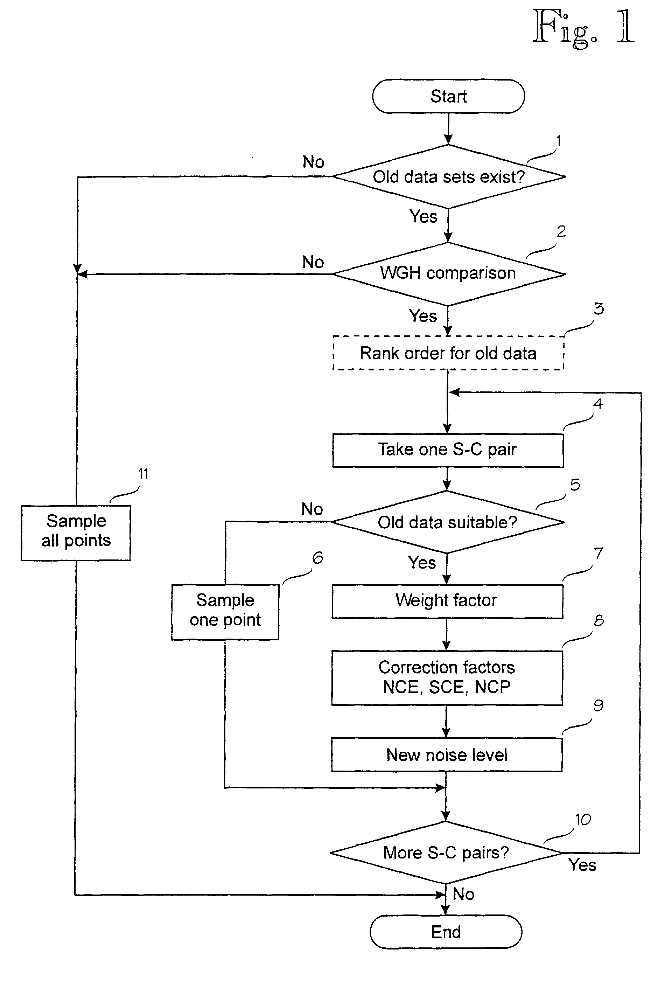

Figure 1 of the enclosed drawings shows as an example a flowchart presenting different method steps of the present invention.

In step 1 of Figure 1 it is tested if there are old or earlier sets of noise level data concerning at least essentially the geographical area to be examined. If the answer is no, there are no other possibilities than to sample all points in step 11 of the flowchart. In this respect the present invention does not provide any help for the calculation or measurement needed to create a new noise situation. But if there are earlier sets of noise level data available so this data can serve as basis for the method of the invention to minimize the need for sampling of noise levels.

In step 2 the earlier sets of noise level data are tested concerning noise weighting. In this step the type of noise weighting used for an earlier set of noise data is compared to the wanted type of noise weighting. If noise weighting as described above is not identical or useful to the wanted type of noise weighting the answer to comparison in step 2 is no and again all points are necessary to be sampled in step 11. In this situation the present invention does not either create a benefit. But if at least one of the earlier sets of noise level data has the same kind of noise weighting as is wanted for the new set of noise level data this noise level data can be used as base data in the present invention.

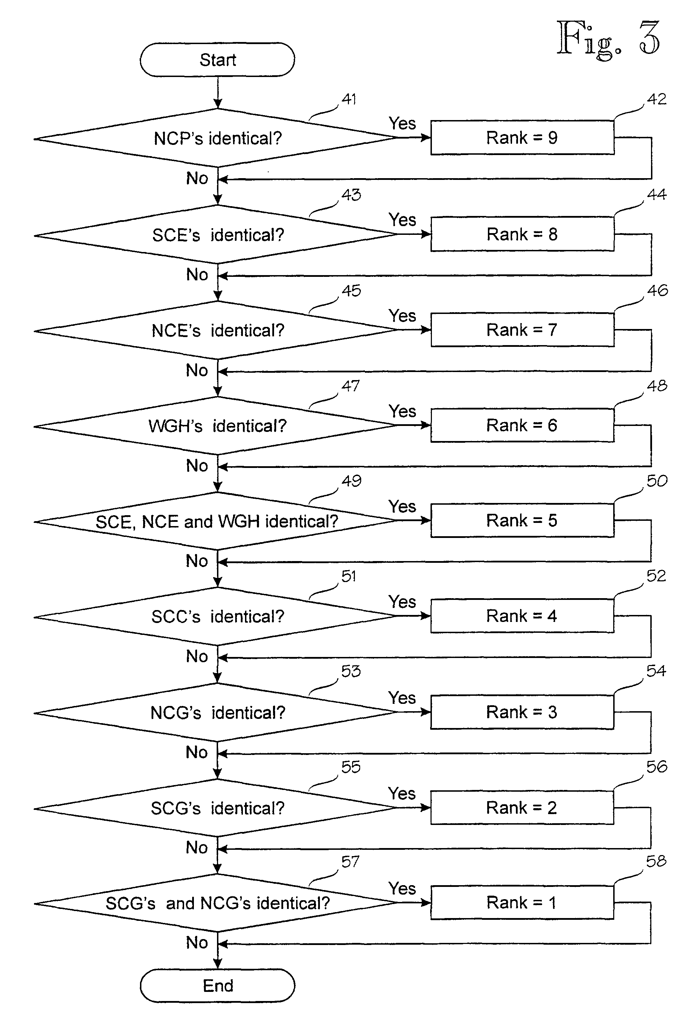

In the following step 3 which has been shown by a broken line the old set or sets of data are ranked based on the type and amount of similarity between the new set of data to be created and the earlier set of data. This possible step is described in more detail in connection with Figure 3.

In step number 4 one noise source coverage point pair of the wanted noise situation is taken into consideration. It is customary in storing noise level data to organize it according to noise sources or coverage points. If the data is organized based on noise sources, the effect of a noise source in all coverage points is stored after one another so that a map-like picture is formed of the effect of the noise source in all coverage points. If the data is organized according to a coverage point, the effects of all noise sources causing noise to said coverage point are stored after one another. Based on this kind of information it is easy to calculate a total noise in one point. independent of the way of organization of the data it basically comprises the noise level caused by one noise source at one coverage point. Accordingly, the method of the invention is based on processing these coverage point noise source pairs.

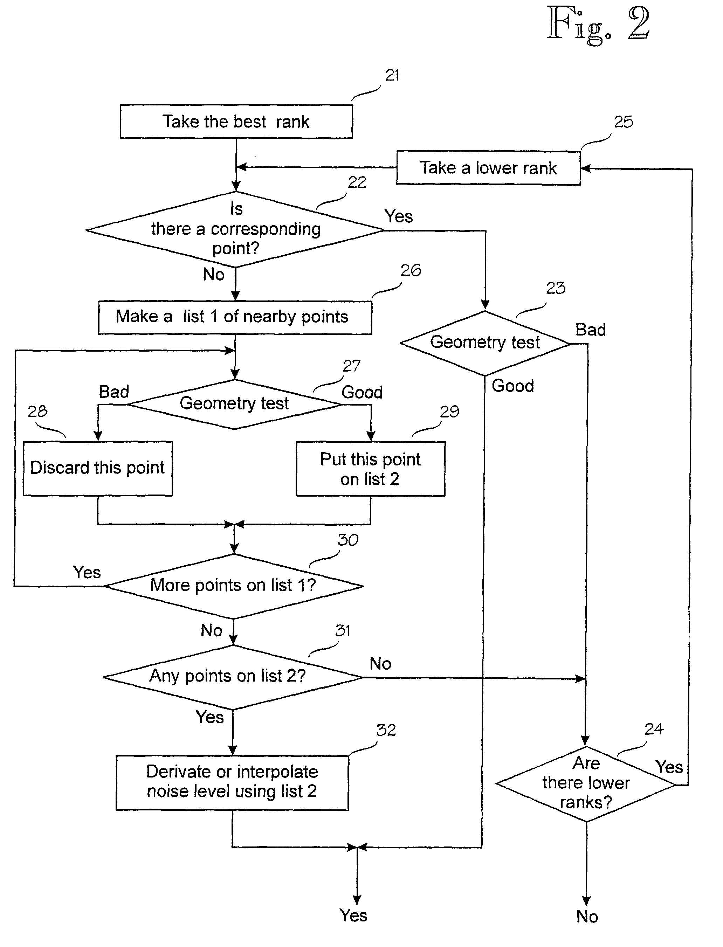

After step 4 it is tested in step 5 if the old data is suitable to be used as basis for a new noise level. This process needs several steps which are shown in more detail in Figure 2. If the answer in step 5 is no, this one point has to be sampled in step 6. The sampling can be done in any of the several ways mentioned already above. If the answer is yes, the process is continued to step 7 in which the noise level found suitable to be used as basis for a new noise level is updated by a weight factor in order to take a change in the importance of said coverage point into account. This can mean for example a building in which there are more people staying than earlier and accordingly this point has to get a higher weight factor.

In the following step 8 there are several correction factors calculated. This step number 8 contains calculation of a first correction factor 1 between noise emissions based on scenarios of noise emission SCE. It also contains the calculation of a correction factor 2 between noise emissions based on noise control by emission NCE as described above. It further comprises the calculation of correction factor 3 between noise protections based on noise control by protection NCP as described above. These correction factors take into account all changes in the descriptors mentioned.

In step 9 the different correction factors calculated in step 8 are taken into account for calculation a new noise level for the noise source coverage point pair. This new noise level calculation can be based for example on the following formula:

$$\text{New level} = 10\lg(\text{Factor1}*\text{Factor2}*\text{Factor3}*10^{\wedge}(\text{Old level}/10))$$

In this way a new noise level has been estimated for one noise source coverage point pair. In step number 10 it is tested if there are more noise source coverage point pairs for which a new noise level has to be estimated. If the answer is yes, it is returned as showed in Figure 1, to step 4. If there are no more new noise source coverage point pairs to be covered, the method of the present invention has reached its end. In this way new noise level can be formed for all noise source coverage point pairs necessary for the new set of noise level data.

Figure 2 shows as an example a flowchart for the step 5 in Figure 1. The flowchart of Figure 2 starts by step 21 in which from the earlier sets of noise level data ranked in step number 3 in Figure 1 the set having the best rank is taken for processing. As can be seen from Figure 1, in this stage one noise source coverage point pair is handled. In step number 22 it is tested if there is a corresponding or at least essentially corresponding point in the set of noise level data ranked best and taken for procession in step 21. If the answer is yes, the method continues to step number 23 named geometry test in which it is tested if the geometry of noise propagation path between noise source and coverage point is at least essentially similar for the wanted noise source coverage point pair and as for the noise source coverage point pair found from the earlier set of noise level data. If the similarity is not good enough the answer to the geometry test is bad and it has to be tested if there are sets of noise level data ranked lower, This test is taken in step 24. If the answer is yes, the lower ranked set of noise level data is taken in step 25 which returns to step 22 already mentioned. If the answer to the test in step 24 is no, the method proceeds in Figure 1 step 4.

If in the test according to step 22 a corresponding or an essentially corresponding point cannot be found from the earlier set of noise level data, a list of points which are within a predetermined distance from the wanted coverage point is made as list number 1 in step 26. After step 26 a similar geometry test as already mentioned in connection with step 23 is done to the points of list 1 in step 27. If in this geometry test it is found that geometry of the propagation path between noise source and coverage point is not similar enough so the answer to the test is bad and this coverage point is discarded in step 28. But if the geometry of noise propagation path between noise source and coverage point is similar or at least essentially similar so this point is accepted on list 2 made in step 29. Both steps 28 and 29 are followed by step 30 in which it is tested if there are more points on list number 1 which have not been dealt with. And if there are more points the answer to the question is yes and the processing returns to the geometry test in step 27. If the answer to the test in step 30 is no, it is tested if there are any points on list 2 made in step 29. If the answer is no, the process returns to step 24 to test if there are lower ranked sets of noise level data. But if there are points on list 2 a noise level to be used for further processing according Figure 1 is derivated or interpolated using the points on list 2. This derivation or interpolation is done in step 32. From step 32 and also from the geometry test according to step 23, if the answer was good, the process continues to the output yes corresponding to the yes output of step 5 in Figure 1.

In the tests and steps according to Figure 2 the earlier sets of noise level data are processed to find out if there are noise source coverage point pairs which can serve as basis for estimation of a new noise level for a coverage according to the present invention. This is one of the basic ideas of the present invention. By this way the earlier sets of data can be processed and data usable for creation of new sets of noise level data can be effectively found out and only those points which cannot be based on earlier stored data have to be sampled. In this way the calculation needed to create a new set of noise level data can be essentially decreased when compared to the prior art method in which all noise source coverage point pairs have to be sampled in order to create a new set of noise level data.

In Figure 3 of the enclosed drawings the ranking mentioned as step 3 in Figure 1 is shown in more detail. The flowchart of Figure 3 shows an example for a possible way of ranking the earlier sets of noise level data. When starting the ranking it is first tested in step 41 if the noise controls by protection NCP are identical and if so rank 9 is given to the set of data in step 42. From step 42 and also from step 41 it is continued to test in step 43 if the scenarios of emissions SCE for the earlier set of noise level data and the wanted set of noise level data are identical and if so rank number 8 is given to this earlier set of noise level data in step 44. From step 44 as also from step 43 it is continued to step 45 in which it is tested if noise control by emission NCE is identical for the wanted set of noise level data and the earlier set of noise level data. If so rank 7 is given to this earlier set of noise level data in step 46. From step 46 as also from step 45 it is continued to test in step 47 if noise weighting WGH is identical for the earlier set of noise level data and the wanted set of noise level data. If so rank 6 is given to the earlier set of noise level data in step 48. From step 48 as well as from the test in step 47 it is continued to test in step 49 if scenario of emission SCE, noise control by emission NCE and noise weighting WGH are identical for the wanted set of noise level data and the earlier set of noise level data. If so rank 5 is given for the earlier set of noise level data in step 50. From step 50 as well as from the test in step 49 it is continued to test in step 51 if the scenario of coverage SCC is identical for the wanted set of noise level data and to the earlier set of noise level data. if so rank 4 is given to the earlier set of noise level data in step 52. From step 52 as well as from step 51 it is continued to test in step 53 if noise control by geometry NCG is identical for the earlier set of noise level data and the wanted set of noise level data. If so rank 3 is given to the earlier set of noise level data in step 54. From step 54 as well as from step 53 it is continued to test in step 55 if scenario of geometry SCG is identical for the earlier set of noise level data and the wanted set of noise level data. If so rank 2 is given for the earlier set of noise level data in step 56. From the step 56 as well as from step 55 it is continued to test in step 57 if the scenario of geometry SCG and noise control by geometry NCG are identical for the earlier set of noise level data and the wanted set of noise level data. If so rank 1 is given to this earlier set of noise level data in step 58. In this way the earlier set of noise level data is ranked based on the similarity of the earlier noise level data and the wanted noise level data.

As already mentioned above the ranking shown in Figure 3 is only one example of rankings possible for the earlier sets of noise level data.

As already mentioned, the present method is carried out automatically in a computer or other digital processor, which is naturally the only reasonable way when the large amount of data to be processed is taken into account. The data is often presented in the form of different colors on a map produced by a printer. The digital form of the data is necessary also for this purpose.

Above the present method for forming a new noise level for a coverage point of a noise source based on earlier noise level data is described based on examples of flowcharts describing the method steps of the present invention. As can be understood from the previous explanation of the flowcharts, especially according to Figures 2 and 3, these flowcharts can be easily modified without deviating from the scope of protection defined by the attached claims. It should also be understood that the order in which the steps described are taken can in many situation be changed. In some occasions a different order for the steps leads to a better result in that respects that it gives there wanted answer quicker but for some other situations the described order of steps gives the best result. Thus, it is not the order of the steps taken but the basic principle of the steps and the properties which are compared when applying those steps to the earlier sets of noise level data which forms the present invention.

## Claims

1.    Method for forming automatically in a digital processor a new noise level for a coverage point of a noise source based on earlier noise level data stored as noise levels for noise source-coverage point pairs covering at least essentially the same geographical area in order to minimize re-sampling of noise levels in noise management and noise control planning, **characterized in that** the method comprises the steps of

estimating a first noise level for said coverage point by adoption of an earlier noise level if said coverage point essentially corresponds to a coverage point present in the earlier noise level data or by derivation from noise level of at least one earlier coverage point found in the earlier noise level data within a predetermined distance from said coverage point;
accepting said first noise level in case of essential similarity in geometry of noise propagation path between noise source and coverage point for said coverage point and the coverage point or points which were used in estimating said first noise level; and
calculating a new noise level by applying to said first noise level a correction factor or correction factors calculated based on differences causing changes in noise level at said coverage point.

2.    Method according to claim 1 when there are available more than one set of earlier noise level data stored as noise levels for noise source-coverage point pairs covering at least essentially the same geographical area, **characterized in that** the method further comprises the step of

creating a ranking order for the sets of earlier noise level data based on type and amount of similarity between the new set of data to be created and the earlier sets of data; and
taking the sets of data for processing in decreasing ranking order for estimation of said first noise level.

3.    Method according to claim 2, **characterized in that** the method further comprises the step of comparing the type of noise weighting used for an earlier set of noise data to the wanted type of noise weighting and passing on for ranking only those sets of data having the wanted type of weighting.

4.    Method according to claim 1, **characterized in that** the method further comprises the step of updating said first noise level by a weigh factor before calculating a new noise level in order to take a change in the importance of said coverage point into account.

## Patentansprüche

1.    Verfahren zum automatischen Bilden eines neuen Geräuschpegels in einem Digitalprozessor für den Erfassungspunkt einer Geräuschquelle basierend auf früheren Geräuschpegeldaten, die als Geräuschpegel für Paare von Geräuschquellenerfassungspunkten gespeichert wurden, und mindestens im wesentlichen den gleichen geographischen Bereich abdecken, um die Wieder-Abtastung von Geräuschpegeln im Geräuschmanagement und der Geräuschkontrollplanung zu minimieren, **dadurch gekennzeichnet, dass** das Verfahren die folgenden Schritte umfasst:

Schätzung eines ersten Geräuschpegels für den besagten Erfassungspunkt durch Übernahme eines früheren Geräuschpegels, wenn der besagte Erfassungspunkt im wesentlichen mit einem Erfassungspunkt aus früheren Geräuschpegeldaten übereinstimmt, oder durch Ableitung des Geräuschpegels mindestens eines aus früheren Geräuschpegeldaten stammenden Erfassungspunktes innerhalb eines vorbestimmten Abstandes vom besagten Erfassungspunkt; und

Annahme des besagten ersten Geräuschpegels für den Fall essentieller Gleichheit in der Geometrie des Geräuschausbreitungspfades zwischen der Geräuschquelle und dem Erfassungspunkt für den besagten Erfassungspunkt, und dem Erfassungspunkt oder Punkten, die zur Abschätzung des besagten ersten Geräuschpegels benutzt wurden; und

Berechnung eines neuen Geräuschpegels durch Anwendung eines Korrekturfaktors auf den besagten ersten Geräuschpegel, oder von berechneten Korrekturfaktoren, die basierend auf Differenzen, die Veränderungen im Geräuschpegel am besagten Erfassungspunkt verursachen, ermittelt wurden.

**2.** Verfahren nach Anspruch 1, wenn mehr als eine Reihe früherer Geräuschpegeldaten verfügbar sind, die als Geräuschpegel für Paare von Geräuschquellenerfassungspunkten gespeichert wurden, und mindestens im wesentlichen den gleichen geographischen Bereich abdecken, **dadurch gekennzeichnet, dass** das Verfahren weitere Schritte umfasst:

Entwurf einer Rangfolge für die Reihen früherer Geräuschpegeldaten basierend auf Art und Ausmaß der Ähnlichkeit zwischen der neuen zu bestimmenden Datenreihe und früheren Datenreihen; und

Übernahme der Datenreihen für die Verarbeitung in abnehmender Rangfolge zur Schätzung des besagten ersten Geräuschpegels.

**3.** Verfahren nach Anspruch 2, **dadurch gekennzeichnet, dass** das Verfahren zudem den Schritt zum Vergleich der für eine frühere Reihe von Geräuschdaten gebrauchten Geräuschgewichtung mit der gewünschten Art von Geräuschgewichtung und für die Reihenbildung nur derjenigen Datenreihen mit der gewünschten Art der Gewichtung umfasst.

**4.** Verfahren nach Anspruch 1, **dadurch gekennzeichnet, dass** das Verfahren zudem den Schritt zur Aktualisierung des besagten ersten Geräuschpegels durch einen Gewichtungsfaktor umfasst, bevor ein neuer Geräuschpegel berechnet wird, um eine Änderung in der Bedeutung des besagten Erfassungspunktes zu berücksichtigen.

## Revendications

**1.** Méthode destinée à former automatiquement dans un processeur numérique un nouveau niveau de bruit pour un point de couverture d'une source de bruit sur la base de données de niveau de bruit précédentes mémorisées comme niveaux de bruit pour les paires source de bruit - point de couverture couvrant au moins en partie la même zone géographique afin de minimiser le ré-échantillonnage des niveaux de bruit dans la gestion du bruit et la planification de contrôle du bruit, **caractérisée en ce que** la méthode comprend les étapes consistant à

évaluer un premier niveau de bruit pour ledit point de couverture en adoptant un niveau de bruit précédent si ledit point de couverture correspond essentiellement à un point de couverture présent dans les données de niveau de bruit précédentes ou en dérivant du niveau de bruit au moins un précédent point de couverture trouvé dans les données de niveau de bruit précédentes à l'intérieur d'une distance prédéterminée dudit point de couverture ;

accepter ledit premier niveau de bruit en cas de similitude essentielle concernant la géométrie du chemin de propagation du bruit entre la source de bruit et le point de couverture pour ledit point de couverture et le ou les points de couverture qui sont utilisés pour évaluer ledit premier niveau de bruit ; et

calculer un nouveau niveau de bruit en appliquant audit premier niveau de bruit un ou des facteurs de correction calculés sur la base des différences provoquant des changements du niveau de bruit audit point de couverture.

**2.** Méthode selon la revendication 1, dans laquelle sont disponibles plus d'un ensemble de données de niveau de bruit précédentes mémorisées comme niveaux de bruit pour les paires source de bruit - point de couverture couvrant au moins en partie la même zone géographique, **caractérisée en ce que** la méthode comprend en outre les étapes consistant à

créer un classement pour les ensembles de données de niveau de bruit précédentes sur la base du type et de la quantité de similitude entre le nouvel ensemble de données à créer et les ensembles précédents de données ; et

prendre les ensembles de données à traiter dans l'ordre décroissant pour l'évaluation dudit premier niveau de bruit.

3.  Méthode selon la revendication 2, **caractérisée en ce que** la méthode comprend en outre l'étape consistant à comparer le type de pondération du bruit utilisé pour un précédent ensemble de données de bruit au type voulu de pondération du bruit et à classer uniquement ces ensembles de données ayant le type de pondération voulu.

4.  Méthode selon la revendication 1, **caractérisée en ce que** la méthode comprend en outre l'étape consistant à mettre à jour ledit premier niveau de bruit par un facteur d'évaluation avant de calculer un nouveau niveau de bruit afin de prendre en compte un changement dans l'importance dudit point de couverture.

# Fig. 1

```
                    ┌──────────┐
                    │  Start   │
                    └────┬─────┘
                         │
         No         ◇─────────────────◇   1
    ◄──────────────◇ Old data sets exist? ◇
                    ◇─────────────────◇
                         │ Yes
         No         ◇─────────────────◇   2
    ◄──────────────◇  WGH comparison  ◇
                    ◇─────────────────◇
                         │ Yes
                    ┌ ─ ─ ─ ─ ─ ─ ─ ─ ┐   3
                      Rank order for old data
                    └ ─ ─ ─ ─ ─ ─ ─ ─ ┘
                         │
                    ┌──────────────────┐   4
                    │ Take one S-C pair│
                    └────────┬─────────┘
         No         ◇─────────────────◇   5
    ◄──────────────◇ Old data suitable? ◇
                    ◇─────────────────◇
                         │ Yes
                    ┌──────────────────┐   7
                    │  Weight factor   │
                    └────────┬─────────┘
                    ┌──────────────────┐   8
                    │ Correction factors│
                    │  NCE, SCE, NCP   │
                    └────────┬─────────┘
                    ┌──────────────────┐   9
                    │ New noise level  │
                    └────────┬─────────┘
                             │
                    ◇─────────────────◇   10
                    ◇  More S-C pairs? ◇ Yes
                    ◇─────────────────◇
                         │ No
                    ┌──────────┐
                    │   End    │
                    └──────────┘
```

11 — Sample all points

6 — Sample one point

Fig. 2

```
                    ┌─────────────────────┐  21
                    │  Take the best rank │
                    └─────────────────────┘              ┌──────────────────────┐  25
                               │                          │  Take a lower rank   │
                               ▼                          └──────────────────────┘
                         ╱───────────╲  22                           ▲
                        ╱     Is      ╲      Yes                      │
                       ╱ there a       ╲─────────────┐                │
                       ╲ corresponding ╱             │                │
                        ╲   point?    ╱              │                │
                         ╲───────────╱               │                │
                               │ No                  ▼                │
                               ▼              ╱───────────╲  23        │
              ┌──────────────────────────┐   ╱             ╲   Bad     │
              │ Make a list 1 of nearby  │  ╱ Geometry test ╲──────────┤
              │         points           │  ╲               ╱          │
              └──────────────────────────┘   ╲─────────────╱           │
                   │          ▲                      │ Good             │
                   ▼          │                      │                  │
             ╱───────────╲    │                      │                  │
       Bad  ╱             ╲ Good                      │                  │
      ┌─────╱ Geometry test╲──────┐                   │                  │
      │     ╲               ╱     │                   │                  │
      │      ╲─────────────╱      │                   │                  │
      ▼                           ▼                   │                  │
┌──────────────┐          ┌──────────────┐            │                  │
│ Discard this │          │ Put this point│           │                  │
│    point     │          │  on list 2   │            │                  │
└──────────────┘          └──────────────┘            │                  │
      │                           │                   │                  │
      └───────────┬───────────────┘                   │                  │
                  ▼                                    │                  │
            ╱───────────╲  30                          │                  │
    Yes    ╱             ╲                             │                  │
   ┌──────╱ More points   ╲                            │                  │
   │      ╲  on list 1?   ╱                            │                  │
   │       ╲─────────────╱                             │                  │
   │              │ No                                 │                  │
   │              ▼                                    │                  │
   │        ╱───────────╲  31        No                │                  │
   │       ╱             ╲───────────────────────────► │                  │
   │       ╲ Any points   ╱                            │                  │
   │       ╲ on list 2?  ╱                             │                  │
   │        ╲───────────╱                              │                  │
   │              │ Yes                                ▼                  │
   │              ▼                              ╱───────────╲  24         │
   │   ┌──────────────────────┐                 ╱    Are      ╲   Yes      │
   │   │ Derivate or interpolate│               ╱ there lower  ╲───────────┘
   │   │ noise level using list 2│              ╲   ranks?    ╱
   │   └──────────────────────┘                  ╲───────────╱
   │              │                                     │ No
   └──────────────┤                                     ▼
                  ▼                                      No
                 Yes
```

Fig. 3

```
                    ┌──────────┐
                    │  Start   │
                    └──────────┘
                         │
                         ▼
              ╱ ╲          41        Yes      ┌──────────────┐ 42
             ╱   ╲──────────────────────────▶│   Rank = 9   │
            ╱ NCP's ╲                          └──────────────┘
            ╲ identical? ╱
             ╲   ╱
              ╲ ╱
               │ No
               ▼
              ╱ ╲          43        Yes      ┌──────────────┐ 44
             ╱   ╲──────────────────────────▶│   Rank = 8   │
            ╱ SCE's ╲                         └──────────────┘
            ╲ identical? ╱
             ╲   ╱
              ╲ ╱
               │ No
               ▼
              ╱ ╲          45        Yes      ┌──────────────┐ 46
             ╱   ╲──────────────────────────▶│   Rank = 7   │
            ╱ NCE's ╲                         └──────────────┘
            ╲ identical? ╱
             ╲   ╱
              ╲ ╱
               │ No
               ▼
              ╱ ╲          47        Yes      ┌──────────────┐ 48
             ╱   ╲──────────────────────────▶│   Rank = 6   │
            ╱ WGH's ╲                         └──────────────┘
            ╲ identical? ╱
             ╲   ╱
              ╲ ╱
               │ No
               ▼
              ╱ ╲          49        Yes      ┌──────────────┐ 50
             ╱   ╲──────────────────────────▶│   Rank = 5   │
            ╱ SCE, NCE and ╲                  └──────────────┘
            ╲ WGH identical? ╱
             ╲   ╱
              ╲ ╱
               │ No
               ▼
              ╱ ╲          51        Yes      ┌──────────────┐ 52
             ╱   ╲──────────────────────────▶│   Rank = 4   │
            ╱ SCC's ╲                         └──────────────┘
            ╲ identical? ╱
             ╲   ╱
              ╲ ╱
               │ No
               ▼
              ╱ ╲          53        Yes      ┌──────────────┐ 54
             ╱   ╲──────────────────────────▶│   Rank = 3   │
            ╱ NCG's ╲                         └──────────────┘
            ╲ identical? ╱
             ╲   ╱
              ╲ ╱
               │ No
               ▼
              ╱ ╲          55        Yes      ┌──────────────┐ 56
             ╱   ╲──────────────────────────▶│   Rank = 2   │
            ╱ SCG's ╲                         └──────────────┘
            ╲ identical? ╱
             ╲   ╱
              ╲ ╱
               │ No
               ▼
              ╱ ╲          57        Yes      ┌──────────────┐ 58
             ╱   ╲──────────────────────────▶│   Rank = 1   │
            ╱ SCG's and ╲                     └──────────────┘
            ╲ NCG's identical? ╱
             ╲   ╱
              ╲ ╱
               │ No
               ▼
          ┌──────────┐
          │   End    │
          └──────────┘
```